# EUROPEAN PATENT APPLICATION

(11) **EP 2 586 645 A2**
(43) Date of publication of application: **01.05.2013**
(21) Application number: 12461537.8
(22) Date of filing: 23.08.2012
(51) Int. Cl.: B60L 5/26, B60L 5/30

(54) **Pantograph**

(30) Priority: 31.10.2011 PL 39681311
(71) Applicant: EC Engineering Sp. z o.o., 31-323 Krakow (PL)
(72) Inventor: Kania, Sebastian, 31-636 Kraków (PL); Gularek, Leszek, 31-906 Kraków (PL); Bar, Marcin, 31-231 Kraków (PL)
(74) Representative: Klar, Miroslaw

(57) **Abstract**

A pantograph for an electric-driven vehicle includes frame (1) electrically insulated from the vehicle where on eccentric shaft (3) girder (4) is mounted pendulously and the said girder is connected by means of an articulated joint with at least upper arm (6) equipped with the slide unit coupled with it. The pantograph is equipped with electric lifting drive (13) electrically insulated from the vehicle and from girder (4) and equipped with at least one tension spring (18) coupled with girder (4).

By means of electric insulator (15) and double-arm drive lever (17) mounted pendulously in frame (1), drive (13) is coupled with one end of the tension string (18), whereas the other end of spring (18) is coupled with girder (4), preferably by a non-circular return strand transmission with open strand (23) whose axis of rotation corresponds to the axis of rotation of girder (4) in relation to frame (1).

## Description

The present invention relates to a pantograph for an electric-driven vehicle, particularly a tramway.

Tramways and electric locomotives often use single-arm pantographs, known for example from the PL 174376 or PL 182235 patent descriptions. Such pantographs feature a single lower arm (girder) fastened pendulously in the vertical plane in the supporting frame which is fastened to the vehicle roof using a system of electric insulators.

The upper end of the pantograph is connected pendulously in the vertical plane with at least one upper arm, at the upper end of which there is a slide unit also mounted by means of an articulated joint. The said slide unit usually comprises two contact shoes cooperating with the contact wires when the pantograph is in the operating position, i.e. when it is lifted.

In order to force the movement of the slide unit, principally parallel to the vehicle roof and the contact wires, at the time of shifting of the pantograph between the operating position and the rest position, in which the pantograph is lowered to the frame, known pantographs are equipped with parallel mechanisms on the basis of two four-bar linkages which, in addition to the lower arm (girder) and the upper arm, comprise a radius rod (lower) - on one side connected by means of an articulated joint with the frame and on the other side with the bottom part of the upper arm, located outside the joint between the lower and the upper arm and at least with one (upper) radius arm - connected by means of an articulated joint with the top part of the lower arm on one side and with the slide unit guide on the other side which is connected by means of an articulated joint with the top part of the upper arm.

In known pantographs the slide unit located at the end of the upper arm is lifted and pressed against the contact wires by the pantograph lifting system which includes at least one lifting spring, and the lowering drives lower the slide unit to the rest position in which the pantograph lies on the frame and the lifting spring or springs are at the maximum tension position.

Such a pantograph drive which ensures pressing the pantograph against the overhead contact line and an effective and weather-independent lowering was disclosed for example in PL 174376.

According to this known solution, the pantograph has at least two contact shoes placed at a distance from each other and supported by at least one upper scissor girder and at least one lower girder mounted pendulously on the vehicle roof. The shoes are pressed against the contact wire by the spring force and lowered towards the vehicle roof when this spring force is overcome by the force generated by the electric lowering drive.

The electric lowering drive is placed indirectly on the vehicle roof and it is at least indirectly electrically insulated not only from the lower scissor girder but also from the vehicle roof.

The lowering drive according to this solution is preferably designed as a spindle drive which includes a housing with the motor-drive spindle and a tubular nut, whereas the spindle end in through the insulators connected by means of an articulated joint, at least indirectly, with the vehicle roof, and the other drive end by a pendulous lever with the pendulous shaft mounted in the frame, as mounted on the vehicle roof, and includes at least one lifting spring connected by a pendulous lever with the pendulous shaft of the lower girder, and according to detailed descriptions of this embodiment, the lowering spring end is connected with a support which forms a transversal element of the support frame of the known pantograph.

In addition, in the preferred embodiment, the electric pantograph lowering drive is coupled with the manual drive activating device, for example a flexible shaft in a tubular enclosure which penetrates through the roof to the vehicle interior and is used for emergency rotation of the lowering drive.

The technical problem which had to be solved is to develop such a design of the pantograph, safe during operation at changing conditions, which could be lifted to the operating position by the electric drive and kept elastically in this position by the drive and the drive spring which is also used to lift the pantograph and lower it to the rest position in which the drive spring is not tensioned.

The problem has been solved by coupling the electric lifting drive placed on the vehicle roof and electrically insulated from the roof and from the pantograph with the pantograph girder (lower arm) by at least one tension spring using an intermediate element which allows - when the pantograph is being lifted and in the operating position - to achieve the stresses of opposite directions in the drive and in the drive spring.

According to the invention, the pantograph includes a frame electrically insulated from the vehicle, in which at least the girder end is pendulously mounted, and at least the other end of the girder is connected by means of an articulated joint with the upper arm equipped with the slide unit connected by means of an articulated joint, and in addition the pantograph includes an electric drive electrically insulated from the vehicle and the girder and at least one tension spring coupled with the girder.

The characteristic feature of the pantograph is that its electric drive is the lifting drive which via the first electric insulator and the double-arm drive lever pendulously mounted on the frame is coupled with one end of the tension drive spring, whereas the other end of the said spring is coupled with the pantograph girder, preferably by a non-circular return strand transmission with an open strand whose axis of rotation corresponds to the axis of rotation of the girder in relation to the frame, and particularly by a non-circular rope or chain transmission.

Due to the simple design and easy operation it is preferable when the electric pantograph lifting drive is of the spindle type in which the spindle is connected through the first insulator with the drive lever and the housing is connected through at least one additional (second) electric insulator with the frame.

In addition, it is preferable when the girder is mounted in relation to the frame on an eccentric shaft as this allows to place the girder close to the frame when the pantograph is in its rest position.

In the embodiment of the invention, a non-circular return strand transmission with an open strand includes a section of a non-circular disk equipped with a rope groove around its circumference, and one end of the rope is connected with the spring and the other is fastened to the transmission disk.

Alternatively, in another embodiment of the invention, a non-circular return strand transmission with an open strand includes a section of a non-circular disk of the chain transmission in which the chain is fastened to the disk and connected with the spring.

In addition, in both mentioned embodiments of the invention, a disk of the non-circular transmission can be, with the same result, connected with the girder or the shaft which mounts the girder pendulously in the frame.

To make the drive structure more rigid, the two-arm drive lever which connects one end of the spring with the electrically insulated drive has a form of a crankshaft with one crank and journals mounted in the bearings on the frame and setting the axis of rotation of the crank.
A rotating articulated joint is located on the shaft crank and it is connected with the spring, and a drive arm is fastened to one of the shaft journals and it is connected with the drive by the first insulator.

The pantograph according to this invention has a compact and simple design and as a result can be easily fastened to the vehicle roof in various positions.

Using an intermediate element between the drive and the drive spring (the spring for pantograph lifting and lowering and for keeping it in the operating position) unexpectedly allowed to achieve, necessary from the operational safety point of view, compressive stresses in the drive spindle insulator when causing by the drive of tensile stresses in the spring is absolutely necessary in order to lift the pantograph and to keep it in the operating position.

Moreover, such a design of the pantograph lifting drive makes it possible to keep it elastically in the operating position while maintaining practically constant pressure force of the slide unit contact shoes against the overhead contact line, and after retracting the pantograph, relieve the drive spring supporting its movement to the rest position.

In addition, full electrical insulation of the lifting drive, both from the pantograph slide unit and from the vehicle, allows a direct and safe coupling of the drive with the manual emergency drive.

The subject of the invention in one of practical embodiments is presented in the appended figures:

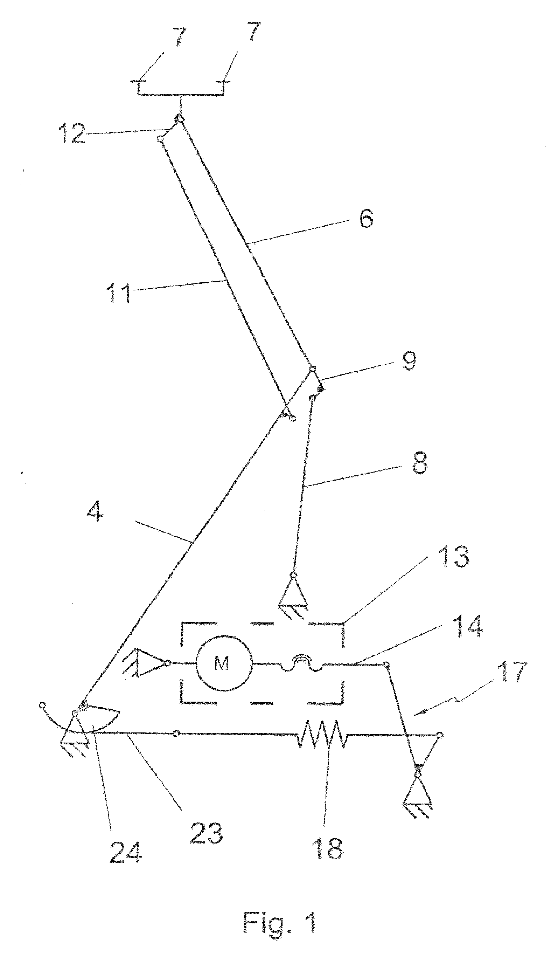

Fig. 1- kinematic diagram of the pantograph

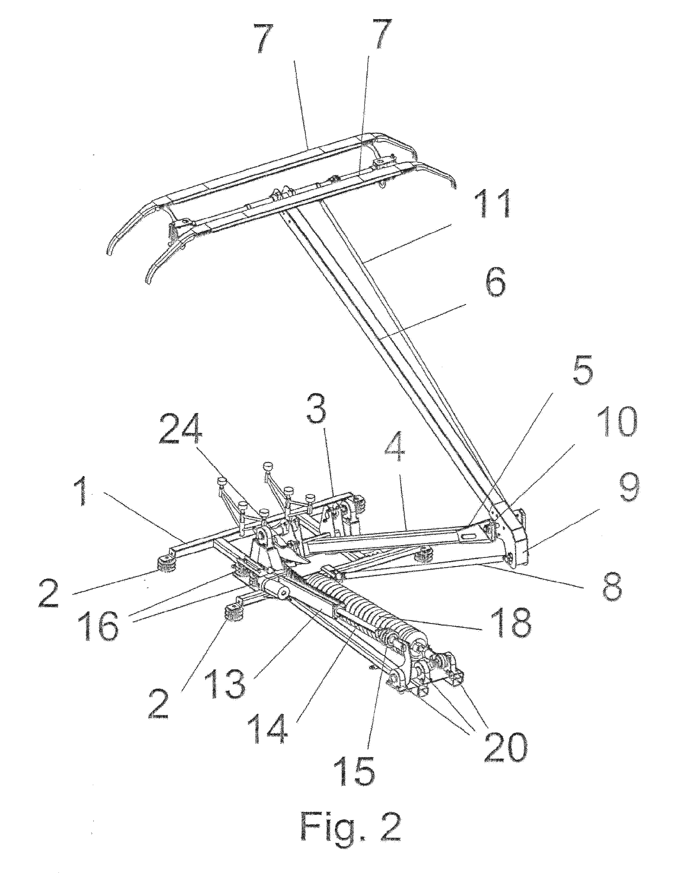

Fig. 2 - axonometric view of the pantograph

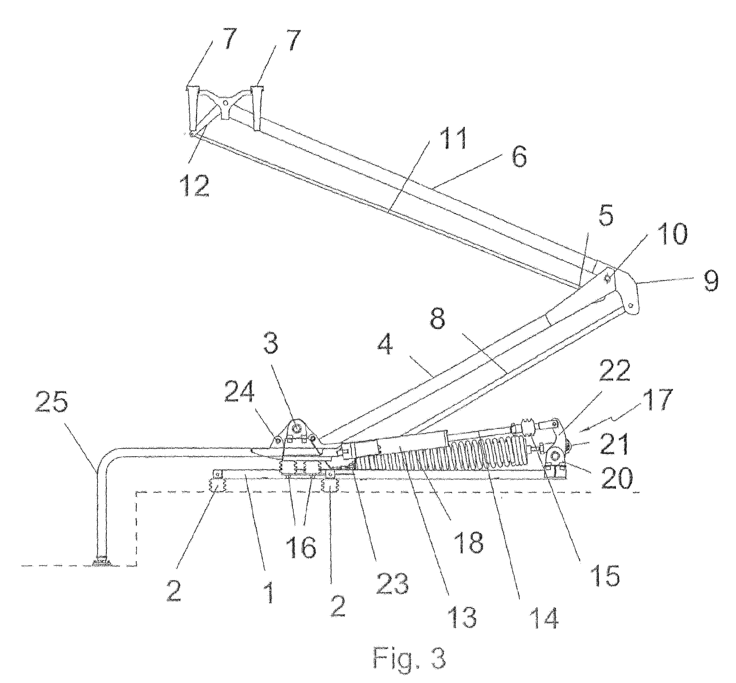

Fig. 3 - side view of the pantograph

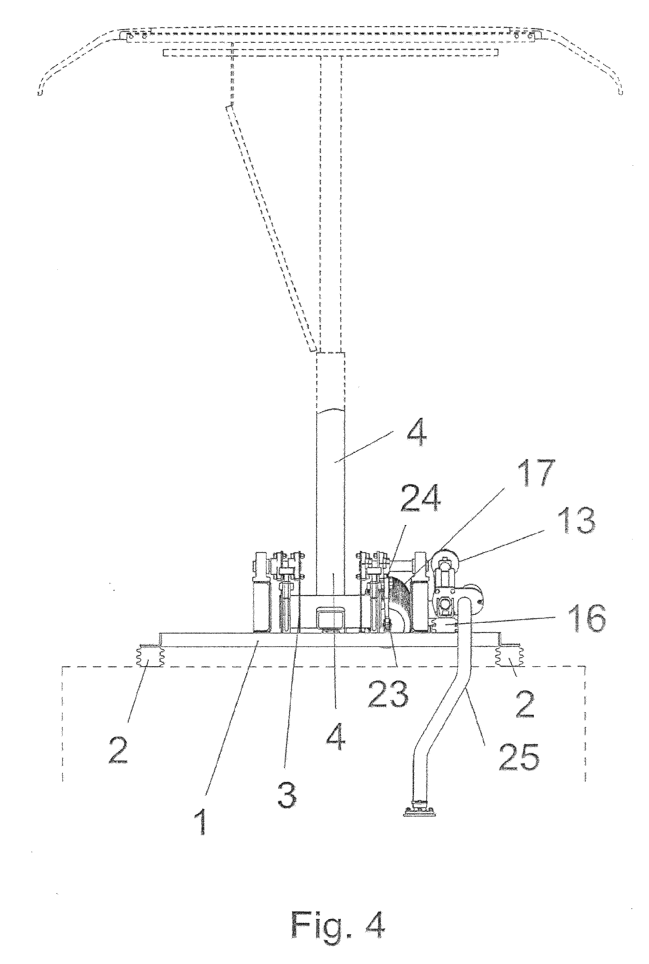

Fig. 4 - fragment of the pantograph seen from the rear of the vehicle

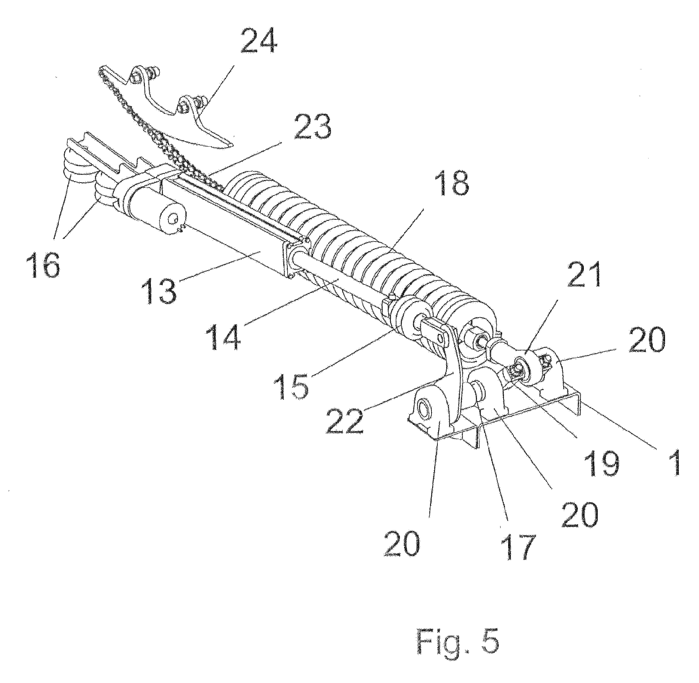

Fig. 5 - axonometric view of the pantograph drive unit

In one of practical embodiments, the pantograph features frame 1 which by means us support insulators 2 is electrically insulated from the vehicle roof (schematically shown by dotted line on the figure).

In frame 1, on eccentric shaft 3 there is a pendulously mounted bottom end of girder 4, which on its upper end has fork 5 used to form an articulated joint between girder 4 with upper arm 6 of the pantograph.

In the shown example girder 4 is mounted in frame 1 by means of eccentric shaft 3, as a result of which when the pantograph is retracted, girder 4 is placed very close to the vehicle roof. But it is understandable and obvious that in other embodiments of the invention girder 4 can be pendulously mounted in frame 1 also using other technical means.

The slide unit with two contact shoes 7 is mounted by means of an articulated joint on the top end of upper arm 6.

In order to ensure a parallel movement of the slide unit during the lowering and lifting of the pantograph, radius rod 8 is connected by means of an articulated joint with frame 1, and the other end of the said radius rod is connected by means of an articulated joint with boom 9 which is the ending of the bottom part of upper arm 6 and it is located outside articulated joint 10 formed between fork 5 of girder 4 and upper arm 6. At the same time, before articulated joint 10, to the side of fork 5, radius arm 11 is fastened by means of an articulated joint, set at a diverging angle in relation to upper arm 6, and the top end of radius arm 11 is connected by means of an articulated joint with slide unit guide 12 which is pendulously mounted in relation to the top end of pantograph arm 6.

The pantograph is equipped with electric lifting drive 13. In the embodiment shown, the drive is of the spindle type, but it is obvious that in other embodiments another type of an electric drive can be used with the same effect.

Spindle 14 of drive 13 is through the first insulator 15 connected by means of an articulated joint with an intermediate element used to transmit the pantograph opening (lifting) force and keep in the operating position. On the other hand, the housing of drive 13 is mounted by means of an articulated joint in frame 1 through two electric insulator s 16.

The said intermediate element is two-arm drive lever 17, mounted pendulously in frame 1 and connected by means of an articulated joint with one end of drive tensile string 18 for pantograph lifting and lowering and for keeping it in the operating position, whereas the other end of spring 18 is coupled with pantograph girder 4.

Using the intermediate element between drive 13 and pantograph lifting and lowering spring 18 proved necessary from the point of view the operational safety of the entire device because when the pantograph is lifted and when it is in the operation position it allows to keep tensile stresses in spring 18 cooperating with girder 4, while simultaneously keeping the compressive stresses in insulator 15 located on spindle 14 of drive 13.

In the presented embodiment, lever 17 has a form of a crankshaft with one crank 19 and journals mounted in bearings 20 on frame 1. On crank 19 there is rotationally mounted head 21 of the articulated joint, connected with spring 18 via a spring tension regulator, whereas drive arm 22 connected by means of an articulated joint with spindle 14 of drive 13 by means of insulator 15 is fastened to one of the shaft journals.

In the presented embodiment, the other end of spring 18 is mechanically coupled with pantograph girder 4 by means of a non-circular return (two-way operation) strand transmission with an open strand (i.e. the strand which does not form a closed loop) whose axis of rotation corresponds to the axis of rotation of girder 4 in frame 1.

The said mechanical coupling between drive 13 and girder 4 has been effected in a manner in which the other end of drive spring 18 is connected with a section of known sprocket chain 23 widely used in chain transmissions and then chain 23 is fastened to non-circular disk 24 fastened to eccentric shaft 3 of girder 4, as a result of which the axis of rotation of disk 24 corresponds to the axis of rotation of girder 4 in relation to frame 1.

In other embodiments, the other end of drive spring 18 can be connected with one end of a steel rope placed in the grove formed on the circumference of at least a section non-circular disk 24, and the other end of the rope is fastened to t disk 24.

It is also understandable that in other embodiments the section of non-circular disk 24 which is a part of non-circular return strand transmission which couples girder 4 with drive 13 can be fastened not to shaft 3 but to girder 4, provided only that the axis of rotation of disk 24 corresponds to the axis of rotation of girder 4 in frame 1.

Using the said non-circular return strand transmission (and particularly a chain or rope transmission) between girder 4 and drive 13 allows to keep during the operation of the pantograph a practically constant static pressure of contact shoes 7 on the overhead contact line despite cyclical changes of the distance between the line and the vehicle roof along the whole traction.

In order to ensure efficient lifting and lowering of the pantograph in an emergency, an emergency manual drive has been used which comprises a flexible shaft in tubular enclosure 25 and fastened to drive 13.

## Claims

1. A pantograph for a an electric-driven vehicle which includes a frame electrically insulated from the vehicle, with at least the girder end pendulously mounted in the frame, equipped with an electric drive electrically insulated from the vehicle and from the girder and with a least one tension spring coupled with the girder, **characterized in that** its electric lifting drive (13) is by means of electric insulator (15) and double-arm drive lever (17) pendulously mounted in frame (1) coupled with one end of tension spring (18), whereas the other end of spring (18) is coupled with girder (4), preferably by a non-circular return strand transmission with open strand (23) whose axis of rotation corresponds to the axis of rotation of girder (4) in relation to frame (1), and particularly by a rope or chain transmission.

2. A pantograph according to claim 1, **characterized in that** drive (13) is of spindle type in which spindle (14) is connected with drive lever (17) by means of the first insulator (15) and the housing is connected with frame (1) by means of at least one more electric insulator (16).

3. A pantograph according to claim 1, **characterized in that** girder (4) is mounted in relation to frame (1) on eccentric shaft (3).

4. A pantograph according to claim 1, **characterized in that** the non-circular strand transmission includes a section of non-circular disk (24) equipped with a rope groove around its circumference, and one end of the rope is connected with spring (18) and the other is fastened to disk (24).

5. A pantograph according to claim 1, **characterized in that** the non-circular strand transmission includes a section of non-circular disk (24) of the chain transmission in which chain (23) is fastened to disk (24) and connected with spring (18).

6. A pantograph according to any of the claims 1, 4 or 5 **characterized in that** disk (24) of the non-circular transmission is coupled with girder (4).

7. A pantograph according to any of the claims 1, 3, 4 or 5 **characterized in that** disk (24) of the non-circular transmission is coupled with shaft (3) which mounts girder (4) in frame (1).

8. A pantograph according to claim 1, **characterized in that** drive lever (17) has a form of a crankshaft with one crank (19) and journals mounted in bearings (20) on frame (1) and setting the axis of rotation of crank (19).

9. A pantograph according to claim 8, **characterized in that** on crank (19) there is rotationally mounted head (21) of the articulated joint, connected with spring (18), and drive arm (22) connected with drive (13) by means of the first insulator (15) is fastened to one of the shaft journals.
